# EUROPEAN PATENT APPLICATION

(11) **EP 1 308 094 A2**
(43) Date of publication of application: **07.05.2003**
(21) Application number: 02079236.2
(22) Date of filing: 15.10.2002
(51) Int. Cl.: A23G 1/00

(54) **Chocolate crumb flavour manipulation**

(30) Priority: 30.10.2001 GB 0126024
(71) Applicant: SOCIETE DES PRODUITS NESTLE S.A., 1800 Vevey (CH)
(72) Inventor: Hansen, Carl Erik, 1066 Epalinges (CH); Budwig, Christopher, Dublin, Ohio 43017 (US); Kochhar, Sunil, 1073 Savigny (CH); Juillerat, Marcel Alexandre, 1000 Lausanne 26 (CH); Armstrong, Euan, Leeds, LS17 6LG (GB); Sievert, Dietmar, 1066 Epalinges (CH)
(74) Representative: Pate, Frederick George

(57) **Abstract**

A process for manipulating the flavour of a chocolate crumb which comprises treating one or more of the crumb ingredients to enhance the flavour and preparing the crumb.

## Description

### Field of the Invention

The present invention relates to processes for the manipulation of the flavour of chocolate crumb and in the preparation of chocolate using such a crumb.

### Background to the Invention

The process of making chocolate is described in "Industrial Chocolate Manufacture and Use", edited by S.T.Beckett, (Third Edition, 1999, Blackwell Science) the contents of which are incorporated by reference.

Chocolate is generally obtained by mixing sugar and cocoa butter with cocoa liquor or cocoa nibs, followed by refining, conching and tempering. Milk chocolate is prepared in a similar way but with the addition of milk. White chocolate is prepared in a similar way to milk chocolate but without the addition of cocoa liquor. One traditional method of producing milk chocolate (dry process) is by mixing milk powder together with cocoa liquor or cocoa nibs, sugar, and cocoa butter, followed by refining, conching and tempering. White chocolate may prepared in a similar way to the above method of preparing milk chocolate but in the absence of cocoa liquor and cocoa nibs.

Another traditional method of producing milk or white chocolate (wet process) involves the use of chocolate crumb.

The manufacture of chocolate crumb includes several steps of condensing and drying either liquid milk or milk concentrate together with sugar with or without cocoa liquor to obtain a stable crumb powder with 1-2% of moisture (Minifie 1974, Manufacturing Confectioner April: 19-26; Bouwman-Timmermans and Siebenga 1995, Manufacturing Confectioner June:74-79). The resulting chocolate crumb is used as an intermediary product in the manufacture of milk or white chocolate. Chocolate production using chocolate crumb involves mixing crumb with the other ingredients of chocolate such as cocoa butter or cocoa liquor followed by refining, conching and tempering. Milk chocolate is prepared from crumb containing cocoa liquor whereas white chocolate is prepared from a crumb which does not contain cocoa liquor. Chocolate crumb generally forms a large proportion of the ingredients in finished milk or white chocolate, e.g. from about 50% to about 80% by weight.

Optionally, the cocoa butter may be partially or totally replaced by direct cocoa butter replacements or alternatives, stearines, coconut oil, palm oil, butter or any mixture thereof which when added to the crumb,will give chocolate materials which are generally referred to as compound or ice cream coatings. In this invention, chocolate prepared from cocoa butter is referred to as standard chocolate and it should be understood that the term "chocolate" includes not only standard chocolate but also compound or ice cream coatings.

This invention deals with the manipulation of the flavour of chocolate crumb and of chocolate prepared from it. Crumb gives different flavour notes to the chocolate. These may be cooked flavours from the drying process or "cowy" flavours obtained by treating the milk. However, the crumb processing adds another stage to chocolate manufacture and therefore adds to its cost. This invention can intensify the crumb flavour so that less crumb is required in the final product.

We have found, surprisingly, that by treating one or more of the crumb ingredients to enhance the flavour, it is possible to manipulate the flavour of the crumb, e.g. by imparting a more intense flavour thereto, which in turn can be used to manipulate the flavour of milk or white chocolate by adding it to the other chocolate ingredients in an effective amount. In addition, when a more intense flavour is imparted to the crumb, the crumb may be added in a reduced amount to the other chocolate ingredients, e.g. in an amount below 40% by weight and preferably below 20% by weight.

Accordingly, the present invention provides a process for manipulating the flavour of a chocolate crumb which comprises treating one or more of the crumb ingredients to enhance the flavour and then reacting the crumb ingredients to prepare the crumb.

The present invention also provides a process for manipulating the flavour of a milk or white chocolate prepared from chocolate crumb which comprises treating one or more of the crumb ingredients to enhance the flavour, reacting the crumb ingredients to prepare the crumb, and then adding other chocolate ingredients to the crumb in an effective amount to prepare the chocolate.

In a first embodiment of the present invention, the flavour of one or more of the crumb ingredients may be enhanced by treatment of one or more of the crumb ingredients with a protease or by varying the reaction time, reaction temperature or the water content during the crumb preparation.

Advantageously, the protease treatment may be preceded by an acid treatment.

A malty crumb flavour may be obtained by acid treatment of a cocoa liquor followed by a protease treatment and preparing the crumb from the treated cocoa liquor with the other crumb ingredients. A chocolate with malty flavour attributes may be prepared by processing the chocolate crumb thus prepared in conventional amounts with other chocolate ingredients.

The cocoa liquor may be fermented or unfermented.

The acid treatment of the cocoa liquor is performed as an *in-vitro* fermentation step to activate the endogenous enzyme system and to utilize the endogenous proteases in cocoa. The subsequent protease treatment is applied to obtain high degree of hydrolysis (DH) and a high level of reactive free amino acids and peptides. This treatment is used to increase the flavour precursor pool during chocolate flavour reactions. Cocoa hydrolysates produced in accordance with this process may be used as an ingredient in a crumb process. The cocoa liquor hydrolysates may be used alone or together with other ingredients or flavour precursors, such as amino acids, peptides or sugars, as a source of amine flavour precursors.

The cocoa liquor may be fully or partially defatted prior to use. Such use of fully or partially defatted cocoa liquor enables flexible use of different cocoa materials as a base ingredient in process flavour reaction. Preferably, the acid treatment involves decreasing the pH of the unfermented cocoa liquor to approximately pH 2 to 5, most preferably to pH 4. Preferably, acetic acid, citric acid or phosphoric acid is used at a concentration of from about 0.01 to about 1.0 M. Protease treatment involves the incubation of the unfermented cocoa liquor mixture with an endoprotease and/or exoprotease. Preferably, from 0.1% to 5% protease based on dry weight of cocoa is used. Most preferably, the cocoa is incubated with 0.1 M acetic acid at 50 °C for 6 hours, followed by treatment with 2% protease, based on dry weight of cocoa, for 18 hours at 50 °C. Treatment times for both the acid and protease treatment are preferably from 1 to 48 hours.

The treated cocoa liquor can be used in the production of chocolate crumb. The manufacture of chocolate crumb is described in EP 99200416.

The chocolate crumb using the treated cocoa liquor can be used in the manufacture of compound chocolate, ice-cream coatings and in other food products, desserts and drinks.

In a second embodiment of the present invention, an alteration of flavour intensity and profile in chocolate crumb may be obtained by mixing and heating from 15 to 70% by weight of milk solids, 10 to 75% by weight of sugar and 0.1 to 10% by weight of milk or vegetable protein hydrolysates. The milk or vegetable protein hydrolysates may be prepared from milk powder, casein, whey, soy, wheat, cotton, peanut, rice or pea protein. A white chocolate with enhanced or different flavour attributes may be prepared by processing the chocolate crumb thus prepared in conventional amounts with other chocolate ingredients

This process involves the use of milk and vegetable protein hydrolysates to generate a pool of free amino acids and peptides for Maillard reactions in chocolate flavour reactions. Normally there is a large excess of lactose which is not significantly reduced during crumb processing, however, when free amino acid/peptide consumption is increased by the addition of milk or vegetable protein with a high degree of hydrolysis (DH), a greater consumption of lactose is also observed. Such an increase in the consumption of free amino acid and peptides alters the flavour profile in the resultant chocolate crumb.

The process may further comprise the addition of cocoa solids. Preferably, the ratio of protein hydrolysates to cocoa solids to sugar to milk solids is 1:2:3:9. The milk or vegetable protein hydrolysates may be prepared from milk powder, casein, whey, soy, wheat, cotton, peanut, rice or pea protein. Preferably from about 2 to about 7% by weight of milk or vegetable protein hydrolysates may be used. The milk powder is skimmed milk powder or caramelised milk powder.

Some off flavours, such as cheesy, bitter or savoury may be generated by the hydrolysis of the protein. However a majority of off-flavours come from the protein mixture itself, when protein mixtures have not been purified. Thus, it is important to start with flavour-neutral starting materials or to purify the proteins prior to use. Such flavour-neutral starting materials include soy isolates and casein. In particular when casein and soy hydrolysates are used with different degree of hydrolysis (DH) up to a 50-fold increase in free amino acid consumption can be achieved. However, other protein hydrolysates may also be used such as milk powder, whey, wheat, cotton, peanut, rice or pea protein hydrolysates. To introduce a caramelised note and strong flavour enhancement, protein hydrolysates can be used in combination with caramelised milk powders.

According to a further aspect of this invention there is provided a chocolate crumb having enhanced flavour characteristics obtainable by the process according to the second embodiment of the present invention. Preferably the chocolate crumb comprises from 1:1.5 to 1:3 milk solids to sugar and from 0 to about 25% by weight, preferably from about 10 to about 15% by weight, of mixture of cocoa solids.

According to another aspect of this invention there is provided a process for the preparation of white or milk chocolate which comprises processing chocolate crumb together with other chocolate ingredients to form chocolate wherein the chocolate crumb is prepared by the process according to the second aspect of the present invention. According to yet a further aspect of this invention there is provided a chocolate product with modified flavour characteristics obtainable by a process according to the second aspect of the present invention.

The milk solids may comprise for example, whole milk powder, whey proteins or low fat milk solids. The low fat milk solids preferably contain less than 5% by weight of fats, more preferably less than 2% by weight of fats and is most preferably skimmed milk powder, or ingredients thereof or recombined solids. The amount of milk may be from about 20 to about 70% and preferably from about 30 to about 65% by weight based on the total weight of the mixture.

The sugar used is preferably in the form of a dry powder which may be crystalline or in the form of a slurry. The sugar used may be, for example, sucrose, glucose, dextrose, lactose, maltose, maltose syrup, malt extract, fructose, invert sugar, corn syrup solids, rhamnose, fucose or sugar replacers such as polyols eg soribtol, mannitol, xylitol, maltitol, lactitol, polydextrose, etc or mixtures thereof. Preferably, the sugar used is sucrose alone, but if desired, one or more other sugars may be used together with sucrose in an amount up to 25% by weight based on the total weight of the sugar. If desired a low calorie sweetening agent may be used as part of the sugar. The amount of sugar may be from about 10 to about 75% and preferably from about 20 to about 60% by weight based on the total weight of the mixture.

When the process is carried out in the absence of cocoa solids, a white crumb is obtained.

When the process is carried out in the presence of cocoa solids, the cocoa solids may be in the form of cocoa liquor, cocoa powder, cocoa butter or cocoa butter alternatives which are vegetable fats such as cocoa butter equivalents or substitutes. The amount of cocoa solids used in the process of the present invention may be from about 3 to about 20% by weight based on the total weight of the mixture, preferably from about 5 to about 15% by weight based on the total weight of the mixture. The amount of water used in the process of the present invention may be from 0.5 to 15% and is preferably from 1.5 to 8% by weight based on the total weight of the mixture.

Consumption of flavour precursors and subsequent flavour changes can be increased by using high degree of hydrolysis hydrolysates and/or by increasing the reaction time. The invention is not limited to the above recipes and processes, but covers also the use of protein hydrolysates in crumb processing under other conditions such as different temperature, different moisture content, different fat content, different pH and different processing equipment (e.g. shear force, extrusion).

It should be understood that the expression "chocolate crumb" used in this invention is intended to include crumb which may be used for making compound coating or substitute chocolate where some or all of the cocoa solids are replaced by cocoa butter alternatives, or which contain sugar replacers or ingredients such as carob or soya protein isolates. Compound coatings are well known to those skilled in the art (see Chocolate, Cocoa, and Confectionery; Third Edition, 1989, Bernard W. Minifie; AVI), pp165-182).

The invention permits the development of chocolate products with a global flavour, optimization of asset utilization, cost reduction, recipe flexibility and development of products with particular flavours that are preferred by the local consumers. The crumbs may be added to the other chocolate ingredients in conventional amounts. However, the crumbs made by the process of the present invention may have intense flavours and may, advantageously, be blended with the other chocolate ingredients in amounts less than normally required, e.g. from 5% to 40%, preferably from 10% to 15% by weight based on the weight of chocolate to make a chocolate. When the crumb is used in lower than normal amounts, the remaining chocolate ingredients to which the crumb is added will contain proportionately increased amounts of milk powder, sugar, and for a milk chocolate, cocoa. The use of crumb in smaller amounts than normal is very advantageous commercially.

Crumb manufacture requires the use of equipment having high capital cost. Therefore reducing crumb requirement means that crumb flavoured chocolate can be manufactured at a more favourable cost.

Replacing part, or the entire crumb component of chocolate with milk solids and butter oil increases the free fat content of chocolate. This allows for an overall reduction in fat content of the chocolate whilst retaining the same flow properties. This leads to savings in ingredient costs.

Crumb is a seasonal product. Having the ability to replace some of the crumb in chocolate decouples to some extent chocolate manufacture from crumb availability. This means that less crumb storage is required in order to continue chocolate manufacture through low crumb producing periods.

The following Examples further illustrate the present invention.

### Example 1: Use of Enzymatically Treated Cocoa Liquor in Chocolate Crumb Processing

(a) West African Amelonado cocoa beans were fermented for 0 to 7 days. The fermented and unfermented beans were sun dried and hand-peeled. Cocoa nibs were roasted for 130 °C for 45 minutes in a Sanyo OMT oven MKII with fan circulation. Unroasted or roasted nibs were milled for 2 min in an IKA M20 laboratory mill followed by two passages through an Exact triple roll mill. Particle size of the liquor was analysed by laser scattering (Malvern). The average particle size by this treatment was 20 µm. Defatting of cocoa was performed on cocoa material which had been milled for a few seconds under cooling in an IKA M20 laboratory mill followed by passing through a 0.8 mm sieve. Cocoa (20 g) was reacted under reflux with 200 ml hexane for a minimum of 6 h. This treatment removed 50% of dry weight. Fermented, unroasted liquor and fermented, roasted liquor were also prepared. Cocoa liquor suspensions were treated after enzyme incubation at 90 °C, 10 min for enzyme inactivation and pasteurisation. Moisture was removed by incubating the liquor at 70-80 °C without or with vacuum.
b) As a reference sample comparison, chocolate crumb was prepared from the above cocoa liquor (a) without any enzyme treatment using the following ingredients, 131 g of skimmed milk powder, 44 g sugar and 26 g of cocoa liquor. The cocoa liquor was melted at 50 °C. The sugar and the skimmed milk powder were added and the mixture was incubated in a Winkworth Z- blade mixer at 100 rpm to 90 °C. Water (6%) was added dropwise during 2 min, and the reaction of the ingredients to form the typical crumb flavour was performed for 15 min at 90 °C. After reaction, the crumb powder was removed from the mixer and let cool to room temperature.
   Sensory evaluation of the crumb powder was performed by adding water heated to 65 °C and mixing with 30 g of crumb powder. The paste mixture in a beaker was covered and the paste was tasted after 30 min at ambient temperature. A panel with the same 6-9 persons tested all the samples. A scale from 1 (low) to 10 (high) was defined for the attributes: cocoa, milk, malt, biscuit, caramel, burnt, sweet and bitter.
c) The following enzymes were used in this example, i) Flavourzyme 1000L: Fungal endo- and exo-protease mixture (pH range 4-8), ii) Promod 192: Fungal amino- and carboxy-peptidase mixture (pH range 4-6), and iii) Promod: Fungal carboxy-peptidase (pH range 5-9). The enzyme was dissolved in the water (50°C) which was then added to the melted cocoa liquors produced as above in (a). Depending on the viscosity, the reactions were carried out in shaking flasks, glass reactors, jacketed with water circulation or in a Winkworth laboratory Z-blade mixer, Type AZ, jacketed with oil circulation.
   To test the flavour changes of the enzymatically treated liquors, canach (50% sugar, 50% liquor) were prepared from the enzymatically treated liquors. The canach samples were evaluated by sensory evaluation.
   The following hydrolysis reactions were performed:
   Long (24h) autolysis: 0.1 M acetic acid, pH 4.0, 50 °C
   Short (6 h) autolysis: 0.1 M acetic acid, pH 4.0, 50 °C
   Long (24 h) hydrolysis: 0.1 M acetic acid, pH 4.0 for 6 h, then 2% Flavourzyme for 18 h
   Short (6 h) hydrolysis: 0.1 M acetic acid, pH 4.0 for 3 h, then 2% Flavourzyme for 3 h

   Compared to the unfermented starting material, there was a strong decrease in astringent, unfermented, green and beany notes in all treated samples. This was accompanied by an increase in the cocoa flavour intensity. Autolysis, using acetic acid alone, resulted in a wide range of flavours such as cereal, roasted and fruity after 6 h and 24 h of autolysis. Autolysis combined with enzyme hydrolysis, resulted in further positive attributes. In particular, a malt note was found in the enzyme-hydrolysed liquor.
(d) Crumb was prepared, using enzymatically treated cocoa liquors which had been prepared in (c) as above. Crumb was prepared using enzyme-treated liquor from unfermented/unroasted as well as fermented/roasted beans. The enzyme-treated liquor from unfermented/unroasted beans was dried and incorporated directly into the crumb reaction or liquor-roasted before used in the crumb. The enzyme-treated cocoa liquors from fermented/roasted beans were not dried, and incorporated directly into the crumb reaction to yield final moisture of 9 and 6.4%. Wet incorporation into the crumb mixture was performed to exclude loss of volatiles during drying.

The resultant crumb samples resulted in sensory profiles which were similar to the crumb produced by West African reference cocoa liquor (fermented and roasted) in accordance with (b). From these experiments, it can be concluded that crumb can be prepared from enzymatically treated cocoa liquor without introducing major off-flavours. The malt note was enhanced by all treatments, especially by including liquor-roasting prior to the crumb reaction. Thus, enzyme treatment of cocoa liquor can be used for flavour enhancement and differentiation in chocolate crumb reactions.

### Example 2: Preparation of Chocolate Crumb using Casein Hydrolysates:

Chocolate crumb was prepared using the following ingredients, 117.7 g of skimmed milk powder, 43.6g sucrose, 25.5g of cocoa liquor and 13.1 g of casein or casein hydrolysates with different degrees of hydrolysis from 28% to 56.9%, see table 1. The cocoa liquor was melted at 50 °C. The sugar and the skimmed milk powder were added and the incubation mix was mixed in a Winkworth Z-blade mixer at 100 rpm to 90 °C. Water (5%) was added dropwise during 2 min, and the reaction of the ingredients to form the typical crumb flavour was performed for 15 min at 90 °C. After reaction, the crumb powder was removed from the mixer and let cool to room temperature. Moisture was analysed with a halogen moisture analyser working on the thermo-gravimetric principle.

Sensory evaluation of the crumb powder was performed by adding water heated to 65 °C and mixing with 30 g of crumb powder. The paste mixture in a beaker was covered and the paste was tasted after 30 min at ambient temperature. A panel with the same 6 persons tested all the samples and the results are shown in Table 1 (reference crumb). Sensory evaluation of the resultant crumb was then undertaken.

| **Attribute:** | **Ref Crumb** | **Casein Non- hydrolysed** | **Casein Hydrolysate 30m DH 28** | **Casein Hydrolysate 1h DH 29** | **Casein Hydroly- sate 2h DH 31** | **Casein Hydroly sate 3h DH43** |
|---|---|---|---|---|---|---|
| Cocoa | 3.0 | 2.8 | 3.3 | 3.0 | 4.0 | 3.5 |
| Milk | 3.0 | 3.0 | 2.3 | 3.0 | 2.5 | 2.7 |
| Malt | 3.0 | 2.3 | 3.3 | 3.7 | 4.2 | 4.7 |
| Biscuit | 5.0 | 4.7 | 3.7 | 3.8 | 4.0 | 4.3 |
| Caramel | 5.0 | 4.3 | 3.7 | 4.3 | 5.2 | 5.0 |
| Burnt | 2.0 | 1.7 | 2.5 | 2.8 | 2.8 | 2.7 |
| Sweet | 5.0 | 3.7 | 3.3 | 3.8 | 3.7 | 3.7 |
| Bitter | 2.0 | 1.7 | 2.0 | 3.8 | 4.0 | 3.0 |

**Table 1 -**

| Sensory evaluation of crumb samples prepared as above. The reference crumb was prepared from 130.8g skimmed milk powder in the absence of casein hydrolysates | | | | | |
|---|---|---|---|---|---|
| **Attribute:** | Reference **crumb** | Casein **Hydrolysate 6h DH 52** | Casein **Hydrolysate 6h DH 52** | Casein **Hydrolysate 24h DH 56** | Casein **Hydrolysate 24h DH 56** |
| Cocoa | 3.0 | 3.2 | 3.5 | 3.0 | 3.3 |
| Milk | 3.0 | 2.8 | 2.7 | 3.1 | 2.2 |
| Malt | 3.0 | 4.0 | 3.8 | 5.8 | 5.8 |
| Biscuit | 5.0 | 4.2 | 4.0 | 4.3 | 3.3 |
| Caramel | 5.0 | 3.9 | 4.3 | 3.6 | 3.7 |
| Burnt | 2.0 | 2.4 | 2.7 | 3.0 | 4.2 |
| Sweet | 5.0 | 3.9 | 4.2 | 3.7 | 3.3 |
| Bitter | 2.0 | 3.4 | 2.8 | 2.8 | 4.2 |

The casein hydrolysates resulted in increased malt flavour attribute in crumb. This increase was most pronounced in the hydrolysate with highest DH (56%), with an increase in aroma intensity from 3.0 in the reference crumb to 5.8 in two replicate crumb samples. The casein hydrolysates obtained by shorter hydrolysis, resulted in lower enhancement of the malt flavour attribute. Thus, only a major increase in the free amino acid pool results in strong malt flavour enhancement. No increase in malt flavour was obtained in a control sample prepared with non-hydrolysed casein.

Cocoa and caramel notes were enhanced in some of the crumb samples, and an increase in bitter and cheesy notes were detected in several of the samples produced with casein hydrolysates.

### Example 3: Preparation of Chocolate Crumb using Soy Hydrolysates

Chocolate crumb was prepared as in Example 2 but replacing the casein hydrolysates with soy hydrolysates. Soy hydrolysates (30 min, 1 h and 2 h) resulted in only minor modification of flavour profiles, whereas crumb prepared from the 24 h hydrolysate showed increased malt flavour as well as other flavours such as acid, spicy, rancid and cheesy.

Volatile analysis of Chocolate Crumb Produced using Milk or Vegetable Protein Hydrolysates according to Examples 2 to 3 was then carried out. Crumb prepared by 10% replacement of skimmed milk protein (SMP) by milk or protein hydrolysates were subjected to solid-phase micro-extraction (SPME) volatile analysis. It was found that there was a significant increase in Strecker aldehydes. For example, up to 10-fold increase was found in the levels of 2-methylpropanal, 2-methylbutanal and 3-methylbutanal from val, ile and leu, respectively.

Volatile analyses were also performed on crumb prepared with soy and casein/SMP hydrolysates. In particular, the sample prepared with SMP hydrolysate contained high level of isovaleric acid. This could explain the strong "sweaty" flavour observed in this sample. The samples prepared with casein hydrolysate, however, contained low levels of isobutyric as well as isovaleric acid. The low level of such flavours in these crumb samples might therefore be related to relatively low levels of these compounds.

Thus, casein and soy hydrolysates showed the lowest off-flavour intensity and the strongest enhancement of malt flavour. The use of protein hydrolysates in crumb reactions strongly increases the consumption of amine flavour precursors. By using casein and soy hydrolysates with different degree of hydrolysis (DH) and increasing crumb reaction time, up to a 50-fold increase in free amino acid consumption can be achieved. Thus, increasing reaction time may also alter the flavour profile of the resultant crumb.

### Example 4: Crumb Preparation Using Caramelised Milk Powder and Casein Hydrolysate:

Crumb samples were prepared in accordance with Example 2 using caramelised milk powder (Milchkaramelpulver FK 30 from Felix Koch Offenbach, Germany), instead of the skimmed milk powder there used. This strongly increased the caramel note from 2 to 7. Crumb prepared using both casein hydrolysate and caramelised milk powder resulted in a further enhanced malt note of the resultant crumb.

### Example 5: White Chocolate preparation

Crumb samples prepared in accordance with examples 2 to 4 were incorporated at 10% level into a white model chocolate for sensory evaluation.

The white chocolate without crumb incorporation was given the following reference attribute scores: sweet 5, milk 5, butter 3, other attributes 0. Incorporation of the reference crumb prepared in accordance with preparative example 2 resulted in slight increase in caramel and cocoa note. White chocolate with crumb prepared with casein hydrolysate resulted in a strong increase in the malt and caramel attribute. White chocolate with crumb prepared with caramelized milk powder strongly increased the caramel note, from 2 to 7. White chocolate with crumb prepared by both casein hydrolysate and caramelized milk powder resulted in a further enhanced malt note. Thus, protein hydrolysates can be used in combination with different raw materials to produce crumb powders which result in a wide range of different attributes when used in chocolate production.

### Example 6: Milk Chocolate Preparation

A crumb sample made in accordance with Example 2 was incorporated at a 15% level into milk chocolate ingredients comprising appropriate amounts of milk powder, sugar and cocoa liquor to give a milk chocolate having an excellent malt and caramel note.

## Claims

1. A process for manipulating the flavour of a chocolate crumb which comprises treating one or more of the crumb ingredients to enhance the flavour and then reacting the crumb ingredients to prepare the crumb.

2. A process for manipulating the flavour of a milk or white chocolate prepared from chocolate crumb which comprises treating one or more of the crumb ingredients to enhance the flavour, reacting the crumb ingredients to prepare the crumb, and then adding other chocolate ingredients to the crumb in an effective amount to prepare the chocolate.

3. A process according to claim 1 wherein the flavour is enhanced by treatment of one or more of the crumb ingredients with a protease, or milk or protein hydrolysates, or by varying the reaction time, reaction temperature or the water content during the crumb preparation.

4. A process according to claim 3 wherein the protease treatment is preceded by an acid treatment.

5. A process according to claim 3 wherein the crumb ingredient used is cocoa liquor.

6. A process according to claim 5 wherein the cocoa liquor is fully or partially defatted prior to use

7. A process according to claim 1 wherein the enhancement alteration of the flavour is obtained by mixing and heating from 15 to 70% by weight of milk solids, 3 to 75% by weight of sugar and 0.1 to 10% by weight of milk or vegetable protein hydrolysates to prepare the crumb.

8. A process according to claim 7 wherein the milk or vegetable protein hydrolysates are prepared from milk powder, casein, whey, soy, wheat, cotton, peanut, rice or pea protein.

9. A process according to claim 7 wherein the process further comprises the addition of cocoa solids.

10. A process according to claim 2 wherein the amount of crumb added to the other chocolate ingredients is from 5% to 40% by weight based on the weight of chocolate.

11. A chocolate crumb having an enhanced flavour compared with a conventional chocolate crumb.

12. A chocolate crumb according to claim 11 having enhanced, malty, caramel, cocoa, burnt or cheesy notes compared with a conventional chocolate crumb.

13. A chocolate crumb according to claim 11 having an increased amount of Strecker aldehydes measured by solid-phase micro-extraction volatile analysis compared with a conventional chocolate crumb.

14. A milk or white chocolate comprising from 5% to 40% by weight of crumb based on the weight of chocolate.

15. Use of a chocolate crumb whose flavour has been manipulated in accordance with claim 1 for the production of a milk or white chocolate.

16. Use of a chocolate crumb whose flavour has been manipulated in accordance with claim 1 for the production of a milk or white chocolate to provide the benefit of a milk or white chocolate having a particular desired flavour independently of assets, processes, formulations and ingredient origins.

17. A process for the production of a milk or white chocolate prepared from chocolate crumb which comprises treating one or more of the crumb ingredients to enhance the flavour, reacting the crumb ingredients to prepare the crumb, and then adding other chocolate ingredients to the crumb in an effective amount to prepare the milk or white chocolate to provide the benefit of a milk or white chocolate having a particular desired flavour independently of assets, processes, formulations and ingredient origins.
